# EUROPEAN PATENT SPECIFICATION

(11) **EP 4 142 482 B1**
(45) Date of publication and mention of the grant of the patent: **08.07.2026**
(21) Application number: 21797077.1
(22) Date of filing: 28.04.2021
(51) Int. Cl.: A01K 61/60, A01K 61/13

(54) **APPARATUS FOR CAPTATION OF PELAGIC CRUSTACEAN LARVAE AND A SYSTEM COMPRISING THE APPARATUS**
VORRICHTUNG ZUR VERHÜTUNG VON FELLIGISCHEN KRUSTENTIERLARVEN UND SYSTEM MIT DER VORRICHTUNG
APPAREIL DE CAPTATION DE LARVES DE CRUSTACÉS PÉLAGIQUES ET SYSTÈME COMPRENANT L'APPAREIL

(30) Priority: 30.04.2020 NO 20200515
(43) Date of publication of application: 08.03.2023
(73) Proprietor: Blue Lice AS, 4032 Stavanger (NO)
(72) Inventor: OLSEN, Karoline Sjødal, 3019 Drammen (NO); OPSTAD, Lars-Kristian, 4352 Kleppe (NO); LØKKE, Gry Merete, 4032 Stavanger (NO)
(74) Representative: Håmsø Patentbyrå AS
(86) International application number: PCT/NO2021/050108
(87) International publication number: WO 2021/221516

(56) References cited:
- WO-A1-2018/062999
- WO-A1-2021/046662
- NO-A1- 20 140 528
- NO-A1- 20 140 640
- NO-A1- 20 190 554
- NO-B1- 344 590

## Description

This invention concerns an apparatus and a system for capturing pelagic crustacean parasites. The pelagic crustacean parasites can be salmon lice. *Lepeophtheirus salmonis* is a common species of salmon louse. More specifically, the invention concerns a trap for capturing the pelagic stages of crustacean parasites before they attach themselves to a fish such as a salmon fish. The pelagic stages can comprise two nauplii stages and an infectious copepodite stage. The invention concerns an elongated apparatus or a trap that is provided with at least one light source inside a chamber of the apparatus. The apparatus is entirely or partially transparent so that the light source is visible from all sides of the apparatus. The light attracts pelagic crustacean parasites. A plurality of inlets in the outer wall of the apparatus lead into the chamber. The chamber is in liquid connection with a pump. The pump will suck water into the chamber through the openings. Crustacean parasites that have come close to the inlet, will be sucked into the apparatus and from there on to the pump. The invention also concerns a system wherein several apparatuses are connected. The system can be fastened to the grid mooring of a fish farm. The system can surround one or more fish cages of a fish farm.

There are several known methods to combat salmon lice that have attached themselves to the fish. These comprise the use of active chemicals in a bath treatment, active chemicals that are supplied in the feed and mechanical methods that wash the salmon lice off the fish. A mechanical method comprises the use of warm water and/or fresh water. Another method comprises the use of electric current. The use of laser is also known.

It turns out that salmon lice can develop a resistance to active chemicals whether these are used in a bath treatment or mixed in the feed. Mechanical methods can cause damage to the fish, lead to increased mortality. The fish may consume less feed after a treatment, which leads to reduced growth. The same applies to bath treatments. In addition, bath treatments are labour-intensive.

There are also known methods that prevent infection of salmon lice on fish. These methods comprise using so-called lice skirts that surround the fish cage with the fish. The lice skirt can be formed of a tight cloth or a fine-meshed net. Salmon lice larvae that are drifting with the current, can be blocked from the fish cage by the lice skirt. The lice skirt can lead to less water exchange in the upper part of the fish cage, so that the oxygen level becomes low. The use of an electric fence downstream of the fish cage is also known.

The salmon lice larvae drift through the fence between electrodes and are killed or hurt by an electric field between the electrodes.

Placing traps for capturing salmon lice larvae before they enter a fish cage is also known.

It is known that salmon lice larvae are phototrophic and are attracted to light. Such traps can be provided with a light source.

NO 344 590 B1 discloses an apparatus for capturing pelagic crustacean larvae, comprising an elongated housing that comprises an outer wall and that comprises a first end portion and a second end portion, an interior chamber in the housing, at least one light source inside the chamber, a plurality of inlets from the exterior of the housing and to the chamber, an elongated light organ inside the chamber, wherein the light organ comprises a holder for the light source, wherein the housing comprises an annular space between the outer wall and the light organ, and wherein the housing comprises an outlet from the annular space, wherein the outlet is arranged to be in liquid connection with a pump.

The purpose of the invention is to remedy or reduce at least one of the disadvantages of prior art, or at least provide a useful alternative to prior art.

The purpose is fulfilled by the features specified in the description below and the subsequent patent claims.

The salmon lice larvae can be found at different depths in the water column throughout a 24-hour time period. Light and salinity can affect where the salmon lice larvae stay. Traps that are supposed to capture salmon lice larvae must therefore be able to attract and capture salmon lice larvae at different depths.

The invention is defined by the independent patent claim. The dependent claims define advantageous embodiments of the invention.

The invention concerns more specifically an apparatus for capturing pelagic crustacean larvae, wherein the apparatus comprises:
- an elongated housing comprising an outer wall;
- an interior chamber in the housing;
- at least one light source inside the chamber;
- a transparent portion in the outer wall; and
- a plurality of inlets through the transparent portion from the exterior of the housing and to the chamber. The apparatus comprises an elongated light organ inside the chamber, and
   the light organ comprises a holder for the light source;
- the housing comprises an annular space between the outer wall and the light organ; and
- the housing comprises an outlet from the annular space, wherein the outlet is arranged to be in liquid connection with a pump.

The light organ can comprise a jacket that surrounds the light source and the holder, and the jacket can comprise a transparent portion at the light source. The housing can at a first end portion be connected to a floating body. The floating body can be fastened to the housing. The floating body can be connected to the housing by a rope or a wire. The housing can at a first end portion be connected to a weight. The weight can be fastened to the housing. The weight can be connected to the housing by a rope or a wire.

The housing can comprise a second end portion, the outlet can be positioned at the second end portion and the outlet can end in a channel.

A purpose of the invention is that one or more inlets are positioned at the light source or at each light source so that the light is strongest at the inlet. The crustacean larvae will then be attracted to the inlet, and the crustacean larvae will be sucked into the apparatus through the inlet. Another purpose of the invention is that the apparatus can concurrently capture crustacean larvae at several depths in the water column.

The invention also concerns a system for capturing pelagic crustacean larvae, wherein the system comprises an apparatus as described above. The system can comprise a collecting pipe that may be in liquid connection with the outlet and in liquid connection with the pump. The system can comprise a plurality of apparatuses. The system can be fastened to the grid mooring of a fish farm. The system can surround at least one fish cage for fish farming.

In the following, an example is described of a preferred embodiment, which is illustrated in the attached drawings, wherein:

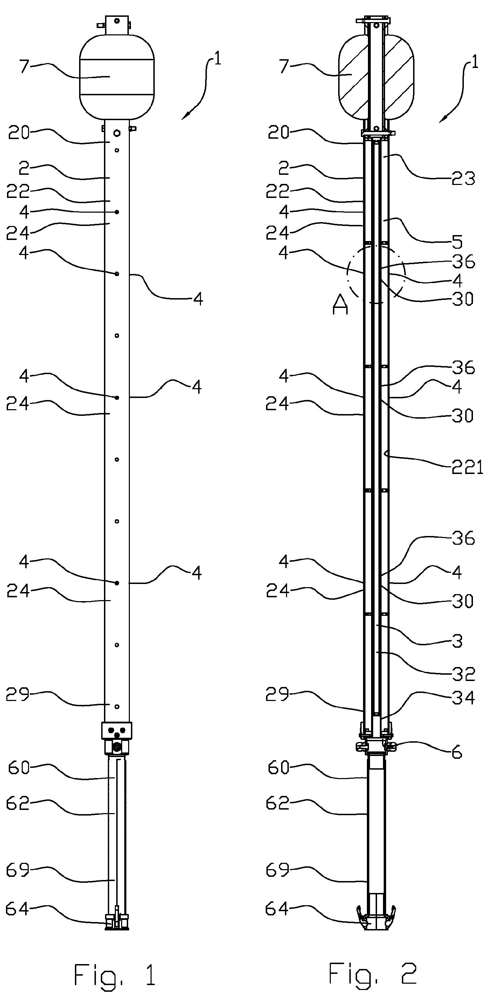

- Fig. 1: shows a side sketch of an apparatus for capturing pelagic crustacean larvae;
- Fig. 2: shows in the same scale as figure 1, a section through the apparatus;

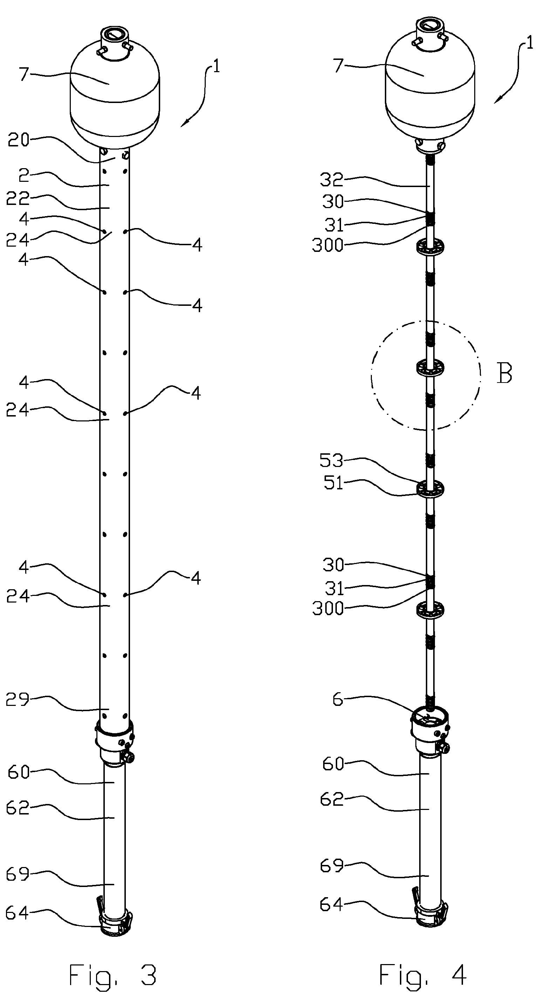

- Fig. 3: shows in the same scale, a sketch in perspective of the apparatus;
- Fig. 4: shows the same as figure 3, and wherein the housing of the apparatus is removed to show the inner construction of the apparatus;

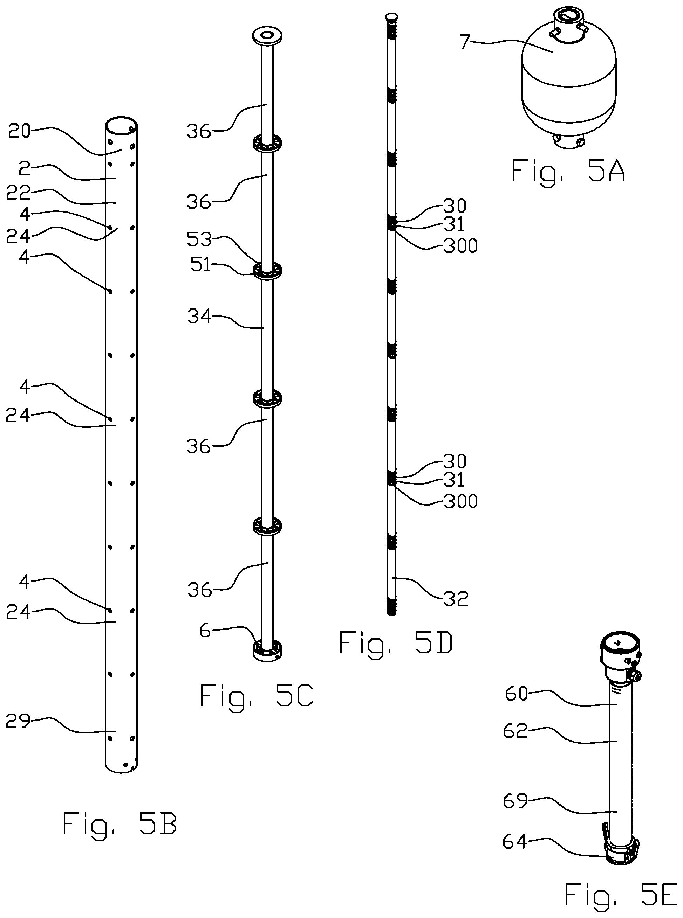

- Fig. 5A-E: shows the apparatus separated into main parts;
- Fig. 6: shows an enlarged detail A of the section A shown in figure 2;
- Fig. 7: shows an enlarged detail B of the section B shown in figure 4; and

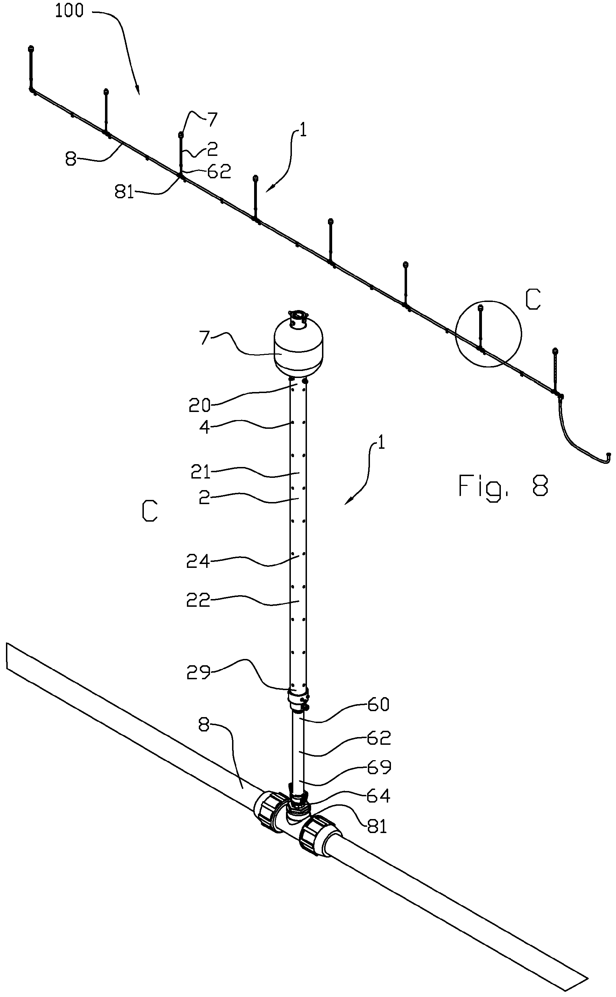

- Fig. 8: shows in a smaller scale a sketch in perspective of a system for capturing pelagic crustacean larvae and an enlarged detail C.

In the figures, reference number 1 refers to an apparatus for capturing pelagic crustacean larvae according to the invention. The apparatus 1 comprises an elongated housing 2. The housing 2 forms a first end portion 20 and an opposite second end portion 29. The housing 2 comprises an outer wall 22. The outer wall 22 forms an interior chamber 23 in the housing 2. At least one light source 30 is positioned inside the chamber 23. The outer wall 22 comprises a transparent portion 24. The transparent portion 24 is positioned at the light source 30 so that light from the light source 30 is visible through the transparent portion 24. In an embodiment the whole outer wall 22 can be formed of a transparent material, such as for example a pipe of transparent plastic. The pipe then forms the outer wall 22. The outer wall 22 can be formed of acrylic, such as polymethyl methacrylate (PMMA). At least one through opening is formed in the transparent portion 24. The through opening forms an inlet 4 from the housing's 2 exterior 21 and to the chamber 23 at the light source 30.

The apparatus 1 comprises a light organ 3 inside the chamber 23. The light organ 3 comprises a holder 32 for the light source 30. An annular space 5 is formed between the inside 221 of the outer wall 22 and the light organ 3. The annular space 5 can extend from the first end portion 20 and to the second end portion 29 as shown in the figures. The housing 2 comprises an outlet 6 from the annular space 5. The outlet 6 is arranged to be in liquid connection with a pump (not shown). One or more spacers 51 in the annular space 5 position the light organ 3 in the chamber 23. The spacer 51 is provided with one or more passages 53 so that liquid can flow past the spacer 51 in the annular space 5.

The light organ 3 is shown with a jacket 34 that surrounds the light source 30 and the holder 32. The jacket 34 comprises a transparent portion 36 at the light source 30. The transparent portion 36 is positioned at the light source 30 so that light from the light source 30 is visible through the transparent portion 36. In an embodiment, the entire jacket 34 can be formed of a transparent material, such as for example a pipe of transparent plastic. The pipe then forms the jacket 34. The jacket 34 can be formed of acrylic, such as polymethyl methacrylate (PMMA).

In the figures, the housing 2 is shown as an elongated, tubular housing 2. This has the advantage that there can be several separate light sources 30 inside the housing 2, and that there can be several inlets 4 in the housing 2 distributed along the length of the housing 2 between the first end portion 20 and the second end portion 29. There can be one or more inlets 4 at each light source 30. Several inlets 4 can be distributed along the circumference of the housing 2 at each light source 30. For example, four inlets 4 can be distributed along the circumference at each light source 30.

In the figures, the light organ 3 is shown as an elongated light organ 3. The holder 32 can be formed of a pipe, for example a pipe of metal such as aluminium. In an alternative embodiment, the holder 32 can be formed of a rod, for example a rod of metal such as aluminium. In a further alternative embodiment, the holder 32 can be formed of a pipe or a rod in a polymer material.

The light source 30 can be formed of an LED 31. The light source 30 can be formed of a plurality of LEDs 31 arranged on a strip 300. The light source 30 can comprise a plurality of strips 300 distributed along the holder 32. The strip 300 can be wound around the holder 32. This has the advantage that a plurality of LEDs 31 will shine along the entire circumference of the holder 32. The light will thereby be visible from all sides of the apparatus 1.

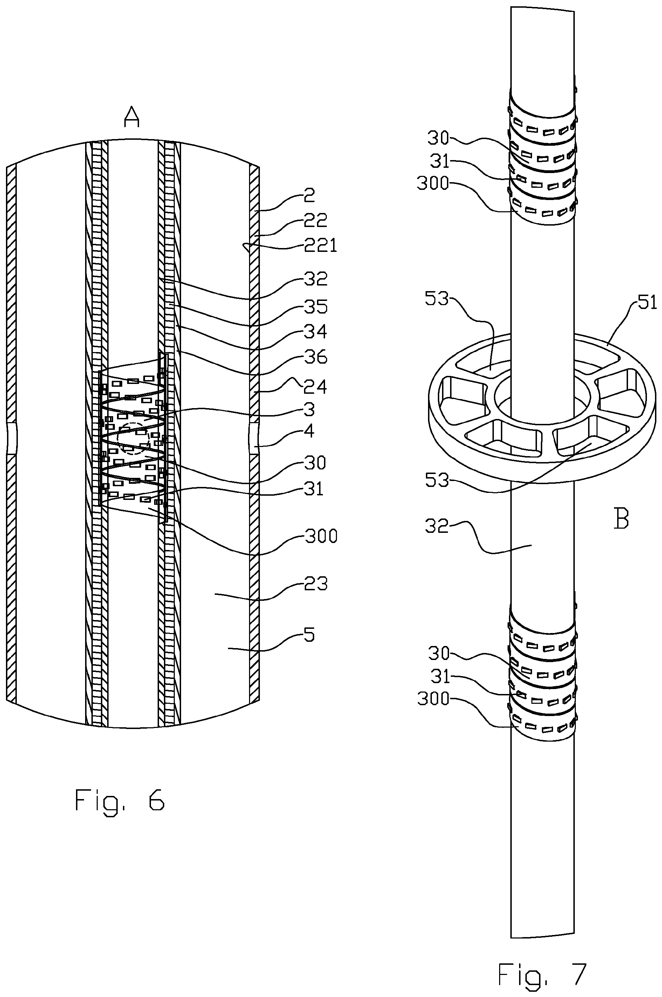

A space between the jacket 34 and the holder 32 with the light source 30 can be filled with a transparent embedment material 35 as shown in figure 6. The embedment material 35 can be electrically insulating. The embedment material 35 can be formed of plastic or resin.

The housing 2 is shown provided with a floating body 7 at the first end portion 20. The floating body 7 can be fastened to the housing 2. The floating body 7 can be connected to the first end portion 20 by a rope or a wire (not shown).

In an alternative embodiment, the housing 2 can be provided with a weight (not shown) at the first end portion 20. The weight can be fastened to the housing 2. The weight can be connected to the first end portion 20 by a rope or a wire (not shown).

The outlet 6 is positioned at the second end portion 29. The outlet 6 ends in a channel 62. The channel 62 is at a first end portion 60 fastened to the housing 2. The channel 62 is at a second, opposite end portion 69 provided with a coupling 64. The channel 62 can be formed of a pipe or a hose. It is advantageous for the channel 62 to be formed of a flexible pipe or a flexible hose.

The channel 62 is at its first end portion 60 shown provided with two sealing nipples 66 for leading an electric wire (not shown) into and out of the apparatus 1. The electric wire provides the light source 30 with electric energy from a source (not shown).

The coupling 64 is connected to a collecting pipe 8 in a T connection 81. A plurality of apparatuses 1 are connected to the collecting pipe 8. The connecting pipe 8 is in liquid connection with a pump (not shown).

The collecting pipe 8 is fastened to a portion of a grid mooring (not shown) of a fish farm (not shown). The connecting pipe 8 can extend partially around a fish cage (not shown). The connecting pipe 8 can extend entirely around a fish cage.

The light source 30 of the apparatus 1 receives electric energy through the wire. The apparatus 1 can be arranged so that the light source 30 is shining continuously. The apparatus 1 can be arranged so that the light source flashes. The light source 30 is visible from the exterior of the apparatus 1. The visible light attracts crustacean larvae (not shown) and the crustacean larvae will seek out the light. The pump will suck water through the collecting pipe 8. The collecting pipe 8 is in liquid connection with the annular space 5 through the channel 62 and the outlet 6. The pump will therefore suck liquid out of the annular space 5. The annular space 5 is in liquid connection with the outside of the housing 2 through the inlet 4. Salmon lice larvae that are approaching the light source 30, will follow a water flow through the inlet 4. The salmon lice larvae will be carried with the water flow towards the pump and can be filtered from the water flow in a filter (not shown) on the sucking side of the pump or on the pressure side of the pump. The pump can be a submerged pump.

The buoyancy body 7 keeps the apparatus 1 approximately vertically oriented in a water column (not shown). The length of the apparatus 1 can be adapted so that vessels can pass unhindered over the apparatus 1 when it is fastened via the collecting pipe 8 to the grid mooring of the fish farm. In an alternative embodiment, a system 100 comprising a plurality of apparatuses 1 and collecting pipes 8 can be fastened in a separate mooring system (not shown). The separate mooring system can be fastened to the grid mooring of the fish farm or its own anchors.

In an alternative embodiment, the weight keeps the apparatus 1 approximately vertically oriented in a water column (not shown).

The apparatus 1 can be approximately two meters long. The axial distance between the inlets 4 can be 10 cm, alternatively 20 cm or alternatively 30 cm. The apparatus 1 can be of a different length than what is described herein. The axial distance between the inlets can be different from what is described herein.

It should be noted that all embodiments mentioned above illustrate the invention, but do not delimit it, and experts on the area will be able to design many alternative embodiments without deviating from the scope of the attached claims. In the claims, the reference numbers in parenthesis shall not be considered delimiting.

The use of the verb "to comprise" and its different forms does not exclude the presence of elements or steps not mentioned in the claims. The indefinite articles "a" or "an" before an element do not exclude the presence of more such elements.

The fact that some features are specified in mutually different dependent claims does not indicate that a combination of these features cannot be used advantageously.

## Claims

1. An apparatus (1) for capturing pelagic crustacean larvae, wherein the apparatus (1) comprises:
- an elongated housing (2) that comprises an outer wall (22) and that comprises a first end portion (20) and a second end portion (29);
- an interior chamber (23) in the housing (2);
- at least one light source (30) inside the chamber (23);
- a transparent portion (24) in the outer wall (22); and
- a plurality of inlets (4) in and through the transparent portion (24) from the exterior (21) of the housing (2) and to the chamber (23),
**characterised in that**
- the apparatus (1) comprises an elongated light organ (3) inside the chamber (23), and the light organ (3) comprises a holder (32) for the light source (30);
- the housing (2) comprises an annular space (5) between the outer wall (22) and the light organ (3); and
- the housing (2) comprises an outlet (6) from the annular space (5), wherein the outlet (6) is arranged to be in liquid connection with a pump.

2. The apparatus (1) according to claim 1, wherein the light organ (3) comprises a jacket (34) that surrounds the light source (30) and the holder (32) and the jacket (34) comprise a transparent portion (36) at the light source (30).

3. The apparatus (1) according to any one of the previous claims, wherein the housing (2) at a first end portion (20) is connectable to a floating body (7).

4. The apparatus (1) according to any one of claims 1 and 2, wherein the housing (2) at a first end portion (20) is connectable to a weight.

5. The apparatus (1) according to any one of the previous claims, wherein the outlet (6) is positioned at the second end portion (29) and the outlet (6) is arranged to be in fluid communication with a channel (62).

6. A system (100) for capturing pelagic crustacean larvae, wherein the system (100) comprises an apparatus (1) according to any one of the previous claims, wherein the system (100) comprises a collecting pipe (8) that is in liquid connection with the outlet (6) and in liquid connection with the pump.

7. The system (100) according to claim 6, wherein the system (100) comprises a plurality of apparatuses (1).

8. The system (100) according to any one of the claims 6 and 7, wherein the system (100) is arranged for fastening to a grid mooring of a fish farm.

9. The system (100) according to any one of the claims 7 and 8, wherein the system (100) is arranged for surrounding at least one fish cage for fish farming.

## Patentansprüche

1. Vorrichtung (1) zum Einfangen von felligischen Krustentierlarven, wobei die Vorrichtung (1) umfasst:
- ein längliches Gehäuse (2), das eine Außenwand (22) umfasst und das einen ersten Endabschnitt (20) und einen zweiten Endabschnitt (29) umfasst;
- eine Innenkammer (23) in dem Gehäuse (2);
- mindestens eine Lichtquelle (30) innerhalb der Kammer (23);
- einen transparenten Abschnitt (24) in der Außenwand (22); und
- eine Vielzahl von Einlässen (4) in und durch den transparenten Abschnitt (24) von der Außenseite (21) des Gehäuses (2) und zu der Kammer (23),
**dadurch gekennzeichnet, dass**
- die Vorrichtung (1) ein längliches Leuchtorgan (3) innerhalb der Kammer (23) umfasst, und das Leuchtorgan (3) eine Halterung (32) für die Lichtquelle (30) umfasst;
- das Gehäuse (2) einen Ringraum (5) zwischen der Außenwand (22) und dem Leuchtorgan (3) umfasst; und
- das Gehäuse (2) einen Auslass (6) aus dem Ringraum (5) umfasst, wobei der Auslass (6) so angeordnet ist, dass er in Flüssigkeitsverbindung mit einer Pumpe steht.

2. Vorrichtung (1) nach Anspruch 1, wobei das Leuchtorgan (3) eine Hülle (34) umfasst, die die Lichtquelle (30) und die Halterung (32) umgibt, und die Hülle (34) einen transparenten Abschnitt (36) an der Lichtquelle (30) umfasst.

3. Vorrichtung (1) nach einem der vorstehenden Ansprüche, wobei das Gehäuse (2) an einem ersten Endabschnitt (20) mit einem Schwimmkörper (7) verbindbar ist.

4. Vorrichtung (1) nach einem der Ansprüche 1 und 2, wobei das Gehäuse (2) an einem ersten Endabschnitt (20) mit einem Gewicht verbindbar ist.

5. Vorrichtung (1) nach einem der vorstehenden Ansprüche, wobei der Auslass (6) an dem zweiten Endabschnitt (29) positioniert ist und der Auslass (6) so angeordnet ist, dass er in Fluidverbindung mit einem Kanal (62) steht.

6. System (100) zum Einfangen von felligischen Krustentierlarven, wobei das System (100) eine Vorrichtung (1) nach einem der vorstehenden Ansprüche umfasst, wobei das System (100) ein Sammelrohr (8) umfasst, das in Flüssigkeitsverbindung mit dem Auslass (6) und in Flüssigkeitsverbindung mit der Pumpe steht.

7. System (100) nach Anspruch 6, wobei das System (100) eine Vielzahl von Vorrichtungen (1) umfasst.

8. System (100) nach einem der Ansprüche 6 und 7, wobei das System (100) zur Befestigung an einer Gitterverankerung einer Fischzuchtanlage angeordnet ist.

9. System (100) nach einem der Ansprüche 7 und 8, wobei das System (100) so angeordnet ist, dass es mindestens einen Fischkäfig für die Fischzucht umgibt.

## Revendications

1. Appareil (1) de captation de larves de crustacés pélagiques, dans lequel l'appareil (1) comprend :
- un boîtier (2) allongé qui comprend une paroi externe (22) et qui comprend une première partie d'extrémité (20) et une seconde partie d'extrémité (29) ;
- une chambre (23) intérieure dans le boîtier (2) ;
- au moins une source lumineuse (30) à l'intérieur de la chambre (23) ;
- une partie transparente (24) dans la paroi externe (22) ; et
- une pluralité d'entrées (4) dans et à travers la partie transparente (24) depuis l'extérieur (21) du boîtier (2) et vers la chambre (23),
**caractérisé en ce que**
- l'appareil (1) comprend un organe lumineux (3) allongé à l'intérieur de la chambre (23), et l'organe lumineux (3) comprend un support (32) pour la source lumineuse (30) ;
- le boîtier (2) comprend un espace annulaire (5) entre la paroi externe (22) et l'organe lumineux (3) ; et
- le boîtier (2) comprend une sortie (6) depuis l'espace annulaire (5), dans lequel la sortie (6) est agencée pour être en communication de liquide avec une pompe.

2. Appareil (1) selon la revendication 1, dans lequel l'organe lumineux (3) comprend une gaine (34) qui entoure la source lumineuse (30) et le support (32) et la gaine (34) comprend une partie transparente (36) au niveau de la source lumineuse (30).

3. Appareil (1) selon l'une quelconque des revendications précédentes, dans lequel le boîtier (2) au niveau d'une première partie d'extrémité (20) est susceptible d'être relié à un corps flottant (7).

4. Appareil (1) selon l'une quelconque des revendications 1 et 2, dans lequel le boîtier (2) au niveau d'une première partie d'extrémité (20) est susceptible d'être relié à un poids.

5. Appareil (1) selon l'une quelconque des revendications précédentes, dans lequel la sortie (6) est positionnée au niveau de la seconde partie d'extrémité (29) et la sortie (6) est agencée pour être en communication fluidique avec un canal (62).

6. Système (100) de captation de larves de crustacés pélagiques, dans lequel le système (100) comprend un appareil (1) selon l'une quelconque des revendications précédentes, dans lequel le système (100) comprend un tuyau de collecte (8) qui est en communication de liquide avec la sortie (6) et en communication de liquide avec la pompe.

7. Système (100) selon la revendication 6, dans lequel le système (100) comprend une pluralité d'appareils (1).

8. Système (100) selon l'une quelconque des revendications 6 et 7, dans lequel le système (100) est agencé pour une fixation à un amarrage de grille d'une ferme piscicole.

9. Système (100) selon l'une quelconque des revendications 7 et 8, dans lequel le système (100) est agencé pour entourer au moins une cage à poissons pour l'élevage de poissons.
